(19) **Europäisches Patentamt**

**European Patent Office**

**Office européen des brevets**

(11) Veröffentlichungsnummer: **0 626 430 A1**

(12) **EUROPÄISCHE PATENTANMELDUNG**

(21) Anmeldenummer: **94107602.8**

(22) Anmeldetag: **17.05.94**

(51) Int. Cl.⁵: **C09D 4/00**

(30) Priorität: **25.05.93 DE 4317302**

(43) Veröffentlichungstag der Anmeldung:
**30.11.94 Patentblatt 94/48**

(84) Benannte Vertragsstaaten:
**AT BE CH DE DK ES FR GB GR IE IT LI LU MC NL PT SE**

(71) Anmelder: **Degussa Aktiengesellschaft**
**Weissfrauenstrasse 9**
**D-60311 Frankfurt (DE)**

㊷ **AT BE CH DE DK ES FR GB GR IE IT LI LU MC NL PT SE**

(71) Anmelder: **FOLLMANN & CO GESELLSCHAFT FÜR CHEMIEWERKSTOFFE UND VERFAHRENSTECHNIK mbH & Co. KG**
**Karlstrasse 59**
**D-32423 Minden (DE)**

㊷ **CH LI**

(72) Erfinder: **Hari, Siegfried**
**Spessartstrasse 80**
**D-63500 Seligenstadt (DE)**
Erfinder: **Wenk, Dietrich**
**Alte Poststrasse 124**
**D-32457 Porta Westfalica-Burkhausen (DE)**

(54) **(Meth)acrylat-System für Leitfähige Bodenbeschichtungen und Verfahren zur Herstellung leitfähiger Bodenbeschichtungen.**

(57) 2.1. Elektrisch leitfähige Bodenbeschichtungen konnten bisher nicht auf (Meth)acrylat-Basis durchgeführt werden, da die verwendeten leitfähigen Füllstoffe, wie Ruß, Graphit oder oberflächenbehandelte Metallpulver, die Aushärtung verhinderten. Erfindungsgemäß soll daher ein polymerisierbares (Meth)acrylat-System geschaffen werden, das bei Umgebungstemperaturen mittels eines Redox-Systems aushärtbar ist und die Anforderungen an leitfähige Bodenbeschichtungen erfüllt.

2.2. Zur Beschichtung verwendbare (Meth)acrylate. die ggf. weitere Komponenten wie Prepolymere, Weichmacher, übliche Additive usw. enthalten, können mit amorphem oder sphäroidem Graphit und/oder Kohlefasern und/oder feinteiligem Metall ausgehärtet werden, wobei noch weitere Füllstoffe zugegeben werden können. Insbesondere amorpher Naturgraphit, vorzugsweise der Teilchengröße 20 bis 1000 $\mu$m, ist geeignet.

Die so hergestellten Beschichtungen erfüllen die Anforderungen an DIN 51 953.

2.3. Leitfähige Beschichtungen, insbesondere Bodenbeschichtungen.

EP 0 626 430 A1

Die Erfindung betrifft ein polymerisierbares, kalthärtendes, reaktives (Meth)acrylat-System für leitfähige Fußbodenbeschichtungen und die Herstellung dieser Beschichtungen.

Gefüllte Methacrylat-Systeme sind bereits Stand der Technik.

So ist aus der DE-OS-20 28 890 die Verwendung von Mischungen auf der Grundlage von monomeren Estern der Methacrylsäure und Füllstoffen als Gießmasse zur Herstellung von ggf. glasfaserverstärkten Formkörpern und Profilen bekannt. Die Mischung gemäß der DE-OS-20 28 890 besteht im wesentlichen aus a) etwa 5 bis etwa 50 Gew.-% monomeren Estern der Methacrylsäure mit ein- und/oder mehrwertigen Alkoholen, wobei ggf. bis zu etwa 20 Gew.-% der Methacrylsäureester durch andere, polymerisierbare Vinyl- oder Allylverbindungen ersetzt sein können, und b) etwa 95 bis etwa 50 Gew.-% eines oder mehrerer in dem Monomeren bzw. in dem Monomerengemisch unlöslicher anorganischer oder organischer Feststoffe und kann daneben noch untergeordnete Mengen an Farbstoffen bzw. Pigmenten sowie ggf. Polymerisationsbeschleunigern enthalten und die Mischung wird, vorzugsweise unter der Einwirkung an sich bekannter Polymerisationskatalysatoren, ausgehärtet. Als Füllstoffe schlägt die DE-OS 20 28 890 u. a. Metallpulver vor, z. B. wird die Verwendung von feinverteiltem Eisen- oder Aluminiumpulver beschrieben.

Die bekannte Gießmasse eignet sich aufgrund des geringen Monomeranteils und des hohen Füllstoffgehalts nur schlecht als Bodenbeschichtung.

Die US-3,907,727 offenbart die Verwendung von Ruß zum Schwärzen von Formkörpern aus gegossenem Acrylatpolymer. Gemäß dieser Patentschrift wird zunächst eine Dispersion aus Ofenruß, Acrylatpolymer, Methylmethacrylatmonomer und einem geringen Anteil Nitrocellulose hergestellt. Zu dieser Dispersion wird dann ein Katalysator gegeben. Hierauf wird die Dispersion in Form gegossen und auf wenigstens 50 °c erhitzt.

Aufgrund des Nitrocellulosezusatzes sowie auf der zur Polymerisation notwendigen relativ hohen Temperatur eignet sich auch dieses System nicht als Bodenbeschichtung.

Aus DKI, Referat-Nr. 93040679707, 1993-04779 sind gefüllte Polymermaterialien bekannt, z. B. Gemische aus Polybutylmethacrylat und CP-Butylacrylat-Isobutylen, die mit Ni-, Al-Pulver oder Graphit gefüllt sind. Die diesem Abstract zugrunde liegende russische Veröffentlichung befaßt sich mit der Analyse des Dehnungsdiagramms von gefüllten Polymermaterialien. Hinweise auf Bodenbeschichtungen sind dem Abstract aus DKI nicht zu entnehmen.

Die DE-OS 23 09 149 befaßt sich mit Polymermassen, bei denen die Oberfläche einer körnigen anorganischen Substanz praktisch vollständig mit einem Polymermaterial beschichtet ist. Als anorganische Substanzen werden u. a. Eisensesquioxid oder Kohlenstoff genannt, während als Monomere Methylmethacrylat oder Acrylsäuremethylester aufgeführt werden. Allerdings werden in einem Beispiel lediglich Eisensesquioxidpartikel mit Polyvinylchlorid überzogen, welches bei einer Temperatur von 65 °c polymerisiert wird. Gemäß der DE-OS 23 09 149 wird ein warmhärtendes Methacrylat-System verwendet, während die genannten anorganischen Partikel mit einem Polymerüberzug versehen werden, um eine bessere Festigkeit beim Verpressen zu erzeugen, als sie etwa Trockengemische aus anorganischen Substanzen und Kunstharz aufweisen würden.

Schließlich kennt man aus der Angewandten Chemie $\underline{53}$ (1976), S. 65 - 72, ein Verfahren zur Polymerisation von MMA in Gegenwart von Graphit. Die Polymerisation wird in $SO_2$-haltigem Wasser durchgeführt, wobei eine Reaktion zwischen in Graphit enthaltener Asche und $HSO_3^-$ als Startreaktion vermutet wird. Das in dieser Veröffentlichung verwendete wäßrige Redoxsystem scheint nicht zur Herstellung leitfähiger Bodenbeschichtungen geeignet.

Seit einigen Jahrzehnten werden elektrisch leitfähige Fußbodenbeschichtungen auf Basis von Epoxiden, Polyurethanen oder Polyestern hergestellt. Zum Erzielen der Leitfähigkeit werden den Beschichtungen leitfähige Füllstoffe wie Ruß, Graphit oder oberflächenbehandelte Metallpulver zugesetzt. Bei (Meth)acrylatbeschichtungen führen diese Zusätze jedoch zu Störungen des Härtungsablaufes. so daß entsprechende leitfähige Bodenbeschichtungen auf (Meth)acrylat-Basis nicht gefertigt werden konnten.

Die Herstellung leitfähiger acrylischer (Meth)acrylat-Beschichtungen war daher sehr aufwendig. So beschreibt die US-PS 4,714,569 ein Beschichtungsverfahren, bei dem Graphit und Ruß in einem bestimmten Verhältnis mit (Meth)acrylsäure und funktionalisierten (Meth)acrylaten prepolymerisiert, die Mischung mit einer Azoverbindung bei erhöhter Temperatur weiterpolymerisiert und das erhaltene Produkt mit einem Vernetzer gehärtet wird. Für die Beschichtung großer Flächen, insbesondere von Böden, ist dieses Verfahren ungeeignet, da die erforderlichen Temperaturen zwischen 80 und 90⁰C über einige Stunden hier nicht realisierbar sind.

Aufgabe der vorliegenden Erfindung ist daher ein polymerisierbares (Meth)acrylat-System, das bei Umgebungstemperaturen mittels eines Redox-Systems aushärtet und das die Anforderungen an leitfähige Beschichtungen erfüllt.

Gelöst wird diese Aufgabe mit einem polymerisierbaren kalthärtbaren reaktiven (Meth)acrylat-System gemäß Anspruch 1.

Das erfindungsgemäße polymerisierbare kalthärtende reaktive (Meth)acrylat-System setzt sich zusammen aus den Komponenten A bis E, die zusammen das Bindemittel darstellen, den leitfähigen Füllstoffen F und anderen Fullstoffen G sowie einem eventuellen Anteil an einem Lösungsmittel H.

Das Bindemittel (A bis E) setzt sich wiederum zusammen aus polymerisierbaren Monomeren A, ggf. in diesen löslichen oder quellbaren (Pre)polymeren B, ggf. Weichmacher C, einem Redoxsystem D, sowie üblichen Additiven E.

Als Monomer A kann ein einziges Monomer eingesetzt werden, z. B. Methyl(meth)acrylat. üblicherweise wird jedoch ein Gemisch verwendet. Die Zusammensetzung der Komponente A ist:

| | |
|---|---|
| (Meth)acrylat | >50 - 100 Gew.-% |
| Methyl(meth)acrylat | 0 - 100 Gew.-% |
| $C_2$ - $c_4$ (Meth)acrylat | 0 - 100 Gew.-% |
| $\geq C_5$ (Meth)acrylat | 0 - 50 Gew.-% |
| mehrwertige (Meth)acrylate | 0 - 100 Gew.-% |
| Comonomere | 0 - 50 Gew.-% |
| Vinylaromaten | 0 - 30 Gew.-% |
| Vinylester | 0 - 30 Gew.-%. |

Vorzugsweise ist Styrol auf max. 20 Gew.-% in A beschränkt, da ein höherer Gehalt zu Störungen bei der Kalthärtung führt und mit starken Geruchsbelästigungen zu rechnen ist.

Ein in Klammern gesetzter Bestandteil steht für dessen optionale Verwendbarkeit, d. h. (Meth)acrylat steht für Acrylat und/oder Methacrylat. Die Monomerenkomponente A enthält zu mind.>50 Gew.-% (Meth)-acrylat, wobei einwertige (Meth)acrylate mit einem $C_1$ - $C_4$-Esterrest bevorzugt sind. Längerkettige Ester, d. h. solche mit einem $C_5$- oder längerkettigen Ester sind auf 50 Gew.-% in der Komponente A beschränkt. Diese Ester machen Beschichtungen oder Formteile zwar flexibler, aber auch weicher, wodurch ihre Gebrauchseigenschaften eingeschränkt werden. Vorzugsweise sind in der Komponente A auch mehrwertige (Meth)acrylate enthalten, wobei die Komponente A auch vollständig aus mehrwertigen (Meth)acrylaten aufgebaut werden kann.

Neben den (Meth)acrylaten kann die Komponente A auch andere Comonomere enthalten, wobei deren Anteil auf 50 Gew.-% beschränkt ist. Unter diesen Comonomeren können Vinylaromaten und/oder Vinylester zu jeweils bis zu 30 Gew.-% in der Komponente A enthalten sein. Höhere Anteile an Vinylaromaten lassen sich schwer einpolymerisieren und können zu einer Entmischung des Systems führen. Höhere Anteile an Vinylester können weiterhin bei tiefen Temperaturen nur ungenügend durchhärten und neigen zu einem größeren Schrumpfverhalten.

Vorzugsweise ist die Komponente A zu 80 - 100 Gew.-% und besonders bevorzugt zu 90 - 100 Gew.-% aus (Meth)acrylaten aufgebaut, da sich mit diesen Monomeren günstige Gebrauchseigenschaften für Beschichtungen oder Formteile erreichen lassen. Der Anteil an $C_2$ - $C_4$-Estern in (Meth)acrylaten ist vorzugsweise auf 50 Gew.-% in der Komponente A beschränkt, bevorzugt sind diese Ester zu max. 30 Gew.-% und besonders vorteilhaft zu max. 20 Gew.-% in der Komponente A enthalten. Ebenso sind die $\geq$ $C_5$-Ester der (Meth)acrylsäure vorzugsweise auf 30 Gew.-% und besonders vorteilhaft auf 15 Gew.-% beschränkt. Hierdurch lassen sich besonders flexible und nicht verschmutzende Beschichtungsmassen herstellen.

Geeignete monofunktionelle (Meth)acrylate sind insbesondere Methylmethacrylat, Butylmethacrylat, Butylacrylat, 2-Äthylhexylacrylat, Ethyltriglykolmethacrylat, Hydroxypropylmethacrylat, als Comonomere eignen sich insbesondere Vinyltoluol, Styrol, Vinylester.

Besonders vorteilhaft sind polyfunktionelle (Meth)acrylate in der Komponente A enthalten, wobei deren Gehalt üblicherweise im Bereich 1 bis 50 Gew.-% und meist bei 1 bis 10 Gew.-% in A liegt. Die polyfunktionellen (Meth)acrylate dienen zur Polymerverknüpfung zwischen linearen Molekülen. Dadurch können Eigenschaften wie Flexibilität, Kratzfestigkeit, Schmelzpunkt oder Härtungsabläufe manipuliert werden.

Übliche polyfunktionelle (Meth)acrylate sind Triethylenglykoldimethacrlyat (TEDMA), Trimethylolpropantrimethacrylat (TRIM], 1,4-Butandioldimethacrylat (1,4-BDMA).

Zur Einstellung der Viskosität des Bindemittels und der Verlaufseigenschaften sowie der besseren Durchhärtung kann der Komponente A ein Polymer oder Prepolymer zugegeben werden. Dieses (Pre)-polymer soll in A löslich oder quellbar sein. Auf einen Teil A werden bis zu 2 Teile des Prepolymers B eingesetzt. Geeignet sind insbesondere Poly(meth)acrylate, wobei diese als festes Polymerisat in A gelöst werden können oder wobei ein sogenannter Sirup eingesetzt werden kann, d. h teilweise polymerisierte Massen entsprechender Monomere. Weiterhin sind geeignet Polyvinylchlorid, Polyvinylacetat, Polystyrol, Epoxydharze, Epoxyd(meth)acrylate, ungesättigte Polyester, Polyurethane oder Mischungen hiervon. Diese Polymere bewirken im Bindemittel, z. B. spezielle Flexibilitätseigenschaften, Schrumpfregulierung, Stabilisator, Hautbildner oder Verlaufsverbesserer.

Dünne Beschichtungen, d. h. solche unter 5 mm. enthalten bevorzugt mindestens 1 Gew.-%, besonders vorteilhaft mind. 3 Gew.-% eines hochmolekularen Polymers, z. B. Poly(meth)acrylats, bezogen auf die Summe A + B.

Weiterhin enthält das Bindemittel üblicherweise einen Weichmacher, wobei auf 10 Teile A + B bis zu 7 Teile eines Weichmachers eingesetzt werden können. Üblicherweise ist in der Summe A bis C der Weichmacheranteil C bei 5 - 25 Gew.-% und meist bei 10 - 20 Gew.-%. Der Weichmacher dient z. B. als Aufnehmer für Peroxidkomponenten für das automatische 2-Komponenten Mischverfahren (Phlegmatisierungsmittel) zur Regulierung der Druck- und Biegezugfestigkeiten sowie zur Variierung der Oberflächenspannung.

Geeignete Weichmacher sind z. B. Phthalsäureester, Adipinsäureester, Chlorparaffine, Harnstoffharze, Melaminharze, modifizierte Phenolate, Polyglykolurethane.

Das Bindemittel (A bis E) kann ferner noch übliche Additive E enthalten, wie sie in reaktiven (Meth)-acrylat-Systemen meist eingesetzt werden. Diese Additive dienen z. B. der Aufhebung der Sauerstoffinhibierung, hierfür sind insbesondere Paraffine zu 0,05 bis 5 Gew.-% im Bindemittel A bis E und/oder Phosphite zu 0,01 bis 1 Gew.-% in A bis E sowie auch eine Polymerhautbildung (paraffinfrei) geeignet. Für letzteres können, um eine nichtinhibierte Oberfläche ohne Paraffin zu erzielen, z. B. extrem hochmolekulare Polymere als Additiv, insbesondere bei Alleinverwendung von Methylmethacrylat, verwendet werden. Schon während der Härtung verdunstet Methylmethacrylat an der Oberfläche und hinterläßt eine klebfreie Oberfläche durch Polymerhautbildung.

Desweiteren können zugesetzt werden Entschäumer, Netzmittel, Thixotropieruttgsmittel, Inhibitoren, Mattierungsmittel, Bläuungsmittel, UV-Stabilisatoren, Polymerisationskettenregler.

Das erfindungsgemäße Bindemittel A bis E ist geeignet zur Kalthärtung, d. h. enthält zur Polymerisation ein Redoxsystem aus einem Beschleuniger und einem peroxydischen Katalysator oder Initiator, wobei diese Komponenten in genügender Menge zur Kalthärtung der Komponente A zugegeben werden. Der Beschleuniger wird üblicherweise in einer Menge von 0,01 bis 5 Gew.-% in A bis E eingesetzt, besonders vorteilhaft zu 0,5 bis 1,5 Gew.-%. Als Beschleuniger eignen sich insbesondere Amine und Mercaptane, bevorzugt sind Dimethyl-p-toluidin, Diisopropoxy-p-toluidin, Diethylol-p-toluidin, Dimethylanilin und Glykoldimercaptoacetat. Desweiteren dienen als Beschleuniger organische Metallsalze, die üblicherweise im Bereich 0,001 bis 2 Gew.-% in A bis E eingesetzt werden. Geeignet sind z. B. Kobaltnaphthenat, Kupfernaphthenat, Kobaltoleat, Kupferoleat.

Als peroxydischer Katalysator eignen sich insbesondere Dibenzoylperoxid und Methylethylketonperoxid. Die Peroxide werden üblicherweise zu 0,1 bis 10 Gew.-% und insbesondere zu 0,5 bis 5 Gew.-% im Bindemittel eingesetzt. Im Bindemittel können von der Komponente D schon die Beschleuniger, z. B. Dimethylparatoluidin, enthalten sein, ohne daß eine Polymerisation bei Umgebungstemperatur stattfindet. Durch Zugabe der restlichen Bestandteile der Komponente D wird die Reaktion gestartet, wobei die Komponente D üblicherweise so bemessen ist, daß das (Meth)acrylat-System eine Topfzeit von 10 min bis 20 min hat. Das erfindungsgemäße (Meth)acrylat-System enthält also nur unmittelbar vor der Anwendung die vollständige Komponente D, bis zum Gebrauch ist die Komponente D nicht oder nur zum Teil enthalten, oder mit anderen Worten, das vollständige funktionsfähige Redoxsystem ist bis zur Polymerisation der polymerisierbaren Bestandteile von diesen fernzuhalten, während einzelne Bestandteile des Redoxsystems bereits mit polymerisierbaren Substanzen vorgemischt sein können.

Als erfindungswesentliche Bestandteile enthält das (Meth)acrylat-System die Komponente F, einen oder mehrere Füllstoffe und zwar bezogen auf die Summe A bis F

amorpher oder sphäroider Graphit      10 – 40 Gew.-%

oder

Kohlefaser mit einer Dicke im Bereich

5 – 30 µm und einer Länge im Bereich

30 – 5000 µm               1 – 10 Gew.-%

oder

feinteiliges Metall in Schuppen-,

Pulver- oder Granulatform mit einer

größten Teilchenlänge ≤ 5 mm      2 – 40 Gew.-%

oder

eine Mischung zweier oder aller dieser leitfähigen

Füllstoffe, wobei in der Mischung die Mindestmenge

jedes einzelnen leitfähigen Füllstoffs entsprechend

seinem Anteil in der Mischung der leitfähigen

Füllstoffe reduziert ist und wobei die Summe der

leitfähigen Füllstoffe auf < 50 Gew.-% beschränkt ist.

Die Komponente amorpher oder sphäroider Graphit ist üblicherweise Naturgraphit. Wichtig ist hierbei, daß nicht kristalliner Graphit, üblicherweise ist dies künstlicher Graphit, eingesetzt wird. Nur Graphit, dessen Partikel abgerundet sind, ist für das erfindungsgemäße polymerisierbare, kalthärtbare, reaktive (Meth)-acrylat-System geeignet. Diese Graphitpartikel liegen üblicherweise in einem Partikelgrößebereich $20 \leq x \leq 100$ µm, wobei x für die größte Partikellänge steht. Die Partikel sind üblicherweise Plättchen mit stark abgerundeten Kanten. Meist wird der Graphit zu max. 30 Gew.-% und üblicherweise zu mind. 20 Gew.-% bezogen auf die Summe A bis F eingesetzt.

Als Graphit kann üblicherweise der kommerziell erhältliche amorphe Naturgraphit eingesetzt werden, bei schlechter Polymerisation (langsames oder gar kein Durchhärten, klebrige Oberfläche) ist die Auswahl unter den amorphen Naturgraphiten durch Röntgenelektronenmikroskopie dahingehend zu treffen, daß ein solcher amorpher Naturgraphit eingesetzt wird, der besonders gerundete Kanten aufweist. Auf diese Weise kann der Fachmann leicht einen geeigneten Graphit auswählen. Vom eingesetzten Graphit sollten mind. 80 Gew.-% eine größte Teilchenlänge zwischen 20 und 1000 µm haben, bevorzugt haben mind. 90 Gew.-% eine größte Teilchenlänge über 20 µm. Besonders vorteilhaft sind solche Graphite. bei denen beim Sieben weniger als 20 Gew.-% unter 20 µm und insbesondere weniger als 20 Gew.-% unter 32 µm liegen. Die Naturgraphite haben üblicherweise einen Kohlenstoffanteil > 70 Gew.-% und meist einen entsprechend hohen Ascheteil. Die üblicherweise mineralischen Begleiter im Naturgraphit sind nicht störend, im Gegenteil, sie reduzieren die inhibierende Wirkung des Graphits.

Die erfindungsgemäß einzusetzenden Kohlefasern liegen üblicherweise bei einer Länge im Bereich 50 bis 2000 µm und besonders bevorzugt im Bereich 100 bis 1000 µm. Je nach Einsetzungszweck sind Faserlängen unter 500 µm besonders geeignet. Der Anteil der Kohlefasern in A bis F liegt besonders vorteilhaft bei 2 bis 5 Gew.-% und insbesondere bei 3 bis 4 Gew.-%. Diese Bereiche sind bei Beschichtungen mit (Meth)acrylat-Systemen besonders vorteilhaft, da lange Kohlefasern sich in diesen Systemen leicht senkrecht stellen und damit einerseits an der Oberfläche bürstenartig heraus stehen und andererseits nicht den gewünschten Leitfähigkeitseffekt erreichen. Die Kohlefasern werden insbesondere für helle Beschichtungen eingesetzt, da man mit einem geringeren Anteil als bei Graphit auskommt. Besonders vorteilhaft sind auch Kombinationen aus Kohlefaser und Graphit, da sich hierdurch kostengünstige Beschichtungen mit guter Leitfähigkeit herstellen lassen.

Ferner sind in den leitfähigen Systemen gemäß der vorliegenden Erfindung auch Metallflitter, -pulver bzw. -granulate einsetzbar, die vorzugsweise eine größte Teilchenlänge von ≤ 2 mm haben. Diese Metalle in Schuppen-, Pulver- oder Granulatform werden auch insbesondere dort eingesetzt, wo helle Beschichtungen gewünscht sind. Üblicherweise werden die Metallfüllstoffe ebenfalls mit Graphit zusammen eingesetzt. Als metallische Füllstoffe eignen sich Kupfer, Aluminium und Chrom-Nickel-Stahl.

Besonders wichtig ist bei den metallischen Füllstoffen, daß diese weder eloxiert noch mit Fettsäure oder Siliconöl vorbehandelt sind, da sich solche metallischen Füllstoffe mit (meth)acrylischen Systemen entweder nicht vertragen oder nicht zur gewünschten Leitfähigkeit führen. Wenn die leitfähigen Füllstoffe F in Mischung eingesetzt werden, dann können von der einzelnen Komponente F entsprechend dem Anteil in der Summe F geringere Mengen eingesetzt werden als oben angegeben, die Höchstmenge der leitfähigen Füllstoffe ist im System A bis F auf 50 Gew.-% beschränkt.

Neben den leitfähigen Füllstoffen F enthalten die erfindungsgemäßen Systeme üblicherweise noch andere Füllstoffe, wobei diese in der Summe A bis G auf 0 bis 92 Gew.-% und die Summe F + G auf ≤ 93 Gew.-% und Füllstoffe zwischen 20 und 50 $\mu$m auf ≤ 30 Gew.-% und solche unter 20 $\mu$m auf ≤ 10 Gew.-% beschränkt sind. Die Partikelgröße der Füllstoffe G wird durch Siebanalyse bestimmt und ist erforderlich zum Erzielen einer genügenden Leitfähigkeit des ausgehärteten (Meth)acrylat-Systems. Wenn in der Summe A bis G größere Mengen an Füllstoffen zwischen 20 bis 50 $\mu$m und insbesondere unter 20 $\mu$m enthalten sind als angegeben, dann wird die Leitfähigkeit des ausgehärteten Systems beeinträchtigt.

Als Füllstoffe werden meist mineralische Füllstoffe, z. B. Quarz, Kreide, Schwerspat, Siliciumcarbid, etc. eingesetzt. Besonders vorteilhaft wird der Anteil der Füllstoffe zwischen 20 und 50 $\mu$m auf 20 Gew.-% und insbesondere auf 10 Gew.-% begrenzt, der Anteil der Füllstoffe unter 20 $\mu$m ist insbesondere auf 5 Gew.-% begrenzt (in der Summe A bis G). Der Anteil der Füllstoffe F + G im Gesamtsystem A bis G ist auf 93 Gew.-% beschränkt, da mit höheren Füllstoffgehalten F + G nicht mehr genügend Bindemittel zur Verfügung steht, um eine feste Beschichtung oder Körper zu erhalten. Wenn Beschichtungen hergestellt werden, ist der Anteil F + G in der Summe A bis G üblicherweise auf max. 80 Gew.-% beschränkt, besonders bevorzugt ist der Bereich 60 bis 80 Gew.-%.

Weiterhin kann das erfindungsgemäße (Meth)acrylat-System auch ein oder mehrere Lösungsmittel enthalten, deren Anteil in der Summe A bis E + H ≤ 15 Gew.-% und üblicherweise ≤ 10 Gew.-% liegt. Als Lösemittel eignet sich z. B. Aceton, Ethylacetat, Methylethylketon. Die Lösungsmittel dienen insbesondere zur Einstellung der Viskosität des Bindemittels, damit dieses besser mit den Füllstoffen F und G vermischt werden kann.

Das erfindungsgemäße (Meth)acrylat-System dient zur Herstellung von leitfähigen Beschichtungen. Insbesondere bei der Herstellung von leitfähigen Bodenbeschichtungen soll die Komponente F in solchen Mengen zugegeben werden, daß die vollständig auspolymerisierte Beschichtung (bzw. Formteil) einen Oberflächenwiderstand (DIN 53 482) von $10^3$ bis $10^9$ Ohm und/oder einen Ableitwiderstand (DIN 51 953) von $10^3$ bis $10^9$ Ohm hat. Je nach verwendetem Bindemittel kann in Versuchsreihen mit den gewünschten leitfähigen Füllstoffen F die für eine gewünschte Leitfähigkeit notwendige Menge bzw. Art der leitfähigen Füllstoffe F ermittelt werden.

Zur vorliegenden Erfindung gehört auch ein Verfahren zur Herstellung einer leitfähigen Beschichtung, bei dem man ein polymerisierbares, kalthärtbares, reaktives (Meth)acrylatSystem enthaltend

A

| (Meth)acrylat | 50 - 100 Gew.-% |
|---|---|
| Methyl(meth)acrylat | 0 - 100 Gew.-% |
| $C_2$ - $C_4$ (Meth)acrylat | 0 - 100 Gew.-% |
| ≥ $C_5$ (Meth)acrylat | 0 - 50 Gew.-% |
| mehrwertige (Meth)acrylate | 0 - 100 Gew.-% |
| Comonomere | 0 - 50 Gew.-% |
| Vinylaromaten | 0 - 30 Gew.-% |
| Vinylester | 0 - 30 Gew.-% |

B auf 1 Teil A 0 - 2 Teile eines in A löslichen oder quellbaren (Pre)polymers

C auf 10 Teile (A + B) 0 - 7 Teile eines Weichmachers

D ein bis zur Polymerisation von den polymerisierbaren Bestandteilen des Systems wenigstens in Bezug auf eine Komponente des Redoxsystems getrennt zu haltendes Redoxsystem enthaltend einen Beschleuniger und einen peroxydischen Katalysator oder Initiator in einer Menge ausreichend zur Kalthärtung der Komponente A

E Übliche Additive

F

leitfähige Füllstoffe bezogen auf die Summe A - F

amorpher oder sphäroider Graphit

10 - 40 Gew.-%

oder

Kohlefaser mit einer Dicke im Bereich 5 - 30 µm

und einer Länge im Bereich 30 - 5000 µm

1 - 10 Gew.-%

oder

feinteiliges Metall in Schuppen- , Pulver-oder

Granulatform mit einer größten Teilchenlänge

≤ 5 mm                              2 - 40 Gew.-%

oder

eine Mischung zweier oder aller dieser

leitfähigen Füllstoffe, wobei in der Mischung

die Mindestmenge jedes einzelnen leitfähigen

Füllstoffs entsprechend seinem Anteil in der

Mischung der leitfähigen Füllstoffe reduziert

ist und wobei die Summe der leitfähigen

Füllstoffe auf 50 Gew.-% beschränkt ist

G

andere Füllstoffe, bezogen auf die Summe A - G

0 - 92 Gew.-%,

wobei

die Summe F + G auf                 ≤ 93 Gew.-%

und Füllstoffe zwischen 20 und 50 µm auf

≤ 30 Gew.-%

und solche unter 20 µm auf          ≤ 10 Gew.-%

beschränkt sind

H

| Lösungsmittel bezogen auf die Summe A - E plus H | ≦ 15 Gew.-% |
|---|---|

auf eine zu beschichtende Fläche aufträgt und aushärten läßt.

Dieses Verfahren zeichnet sich insbesondere dadurch aus, daß es bei Umgebungstemperatur durchgeführt werden kann, d. h. üblicherweise zwischen 0 und 35 °C, aber auch, sofern gewünscht, bei extremeren Temperaturen wie -10 bis +45 °C.

Die leitfähigen Beschichtungen können grundsätzlich auf allen festen Untergründen aufgebracht werden, besonders geeignet sind Asphalt, Betonasphalt, Bitumenestrich, Beton, Estrich, Keramikfliesen, Metall, Holz, (z. B. Stahl, Aluminium). Je nach Art des Untergrundes ist es vorteilhaft, eine Haftgrundierung vor der erfindungsgemäßen Beschichtung aufzutragen. Diese Haftgrundierung ist bei Beschichtungen Stand der Technik und hat beispielsweise folgende Zusammensetzung

| festes Epoxidharz | 30 Gew.-% |
| Xylol | 60 Gew.-% |
| Butanol | 10 Gew.-%. |

Grundierungen sind beschrieben beispielsweise in Merkblatt Degadur, Teil 1, 2 und 3, Degussa AG. Deutschland.

Auf die Grundierung wird üblicherweise zur Verbesserung der Querleitfähigkeit ein oder mehrere stark leitende Ableitbänder, Faserstränge, Metallfolien oder Drähte eingelegt, die vorteilhaft im Abstand von einigen Metern (1 bis 10 m), meist im Quadrat aufgeklebt und elektrisch leitend miteinander verbunden werden. Eine Hauptader wird über die elektrische Erdleitung an Nullpotential angeschlossen.

Ebenso ist es vorteilhaft. auf (oder unter) die Erdleitbänder einen Leitlack aufzubringen, der üblicherweise aus einem Bindemittel mit oder ohne Lösungsmittel und leitfähigen Füllstoffen zusammengesetzt ist. Dieser Leitlack wird vorteilhaft gleichmäßig über die ganze Fläche verteilt, günstige Schichtdicken liegen im Bereich 0,05 bis 0,5 mm und insbesondere zwischen 0,1 und 0,2 mm. Eine übliche Zusammensetzungen des Leitlacks enthält beispielsweise

```
flüssiges Epoxidharz (Epoxyäquivalent 190)
                                         33,0 Gew.-%
Aminhärter (aliphatisches Polyamin) Aminzahl 700
                                         14,0 Gew.-%
Äthanol                                  17,5 Gew.-%
Benzin 80/110°C SP                       10,5 Gew.-%
amorpher Naturgraphit 32 - 75 µm         25,0 Gew.-%
oder
reaktiver Methacrylatsirup               65 Gew.-Teile
amorpher Naturgraphit 32 - 75 µm         25 Gew.-Teile
Kohlefasern 100 µm                        5 Gew.-Teile
Aceton                                    5 Gew.-Teile.
```

Nach der Trocknung oder Aushärtung des Leitlacks wird üblicherweise auf diesen die erfindungsgemäße leitfähige Beschichtung, vorzugsweise in einer Dicke zwischen 0,2 bis 5 mm, besonders günstig in einer Dicke zwischen 1 und 2 mm aufgebracht. Dies erfolgt beispielsweise mittels einer Kelle, Rakel. Traufel oder Spritzpistole oder auch mit einer Rolle oder einem Pinsel.

Falls gewünscht kann auf die leitfähige Beschichtung noch eine Rutschhemmung aufgetragen werden, dies erfolgt günstigerweise vor dem Aushärten mit groben Füllstoffkörnungen, beispielsweise durch Einstreuen von z. B. Siliciumcarbid, Quarzsand, etc., meist mit einer Korngröße zwischen 0,1 bis 5 mm, vorzugsweise 0,2 bis 2 mm.

Das erfindungsgemäße polymerisierbare kalthärtende reaktive (Meth)acrylat-System kann in verschiedenen Vormischungen bereitgestellt werden. Solche Vormischungen können beispielsweise enthalten (alle Angaben in Gewichtsteilen)

1)  Das Bindemittel ohne den Katalysator bzw.
    Initiator, z. B:

|  |  |
|---|---|
| Polymethylmethacrylat, mittelmolekular | 20,2 |
| Methylmethacrylat | 58,0 |
| Dibutylphthalat | 20,0 |
| Dimethyl-p-toluidin | 0,5 |
| 1,4-Butandioldimethacrylat | 0,5 |
| Paraffin Schmelzpunkt 56°C | 0,5 |
| Methylethylketon | 0,3 |
| Styrol | 1,0 |

2)  Die Füllstoffe, z. B.:

|  |  |
|---|---|
| Kohlefaser 0,4 mm | 4,0 |
| Aluminiumpulver 0 - 200 µm | 33,0 |
| Titandioxid Rutil Pigment | 4,0 |
| Eisenoxidschwarz Pigment | 2,0 |

3)  Den Härter (Katalysator bzw. Initiator in
    Phlegmatisierungsmittel), z. B.:

|  |  |
|---|---|
| Dibenzoylperoxid 50 % | 2,0 |

oder

1) reaktives Methacrylatharz ohne Härter (A - E)

60,0

2) Aluminiumpulver 0 - 100 µm     30,0

   Kohlefaser 100 µm     5,0

   Pigmentpulver     5,0

3) Härter     2,0

oder

1) reaktives Methacrylatharz (A - E) ohne Härter

95,0

2) Kohlefasern 400 µm     5,0

3) Härter     2,0

oder

1) reaktives Methacrylatharz (A - E) ohne Härter

75,0

2) amorpher Naturgraphit 32 - 75 µm     25,0

3) Härter     2,0

oder

1) reaktives Methacrylatharz (A - E) ohne Härter

77,0

2) amorpher Naturgraphit 32 - 75 µm     10,0

   Kohlefasern 100 µm     3,0

   Aluminiumflitter     10,0

3) Härter     2,0

oder

1) reaktives Methacrylatharz (A - E) ohne Härter

75,0

2) amorpher Naturgraphit 32 - 75 µm     20,0

   Kohlefasern 100 µm     3,0

3) Härter     2,0.

Diese Vormischungen werden an Ort und Stelle gemischt und sofort aufgetragen, übliche Topfzeiten sind 10 bis 20 min bei +20°C.

Bisher war es nicht möglich, mittels eines reaktiven, kalthärtenden (Meth)acrylat-Systems leitfähig Beschichtungen herzustellen, da die üblichen leitfähigen Füllstoffe sich in diesen Systemen entmischen, in ungeeigneter Weise agglomerieren, und insbesondere die radikalische Polymerisation hemmen. Dies ist insbesondere bei Graphit oder Ruß der Fall, der aufgrund seiner sich an der Oberfläche befindlichen Sauerstoff-enthaltenden Gruppen die für die Polymerisation notwendigen Radikale fängt. Aus diesem Grund waren bislang solche Körper nur durch Heißhärtung mit Azo-Verbindungen zugänglich. Mit den in der Erfindung beschriebenen Füllstoffen in Kombination mit (Meth)acrylaten und einem bestimmten Redox-System zur Aushärtung sowie in Kombination mit weiteren Komponenten ist es nun möglich, die vorteilhaften (Meth)acrylat-Beschichtungen auch leitfähig herzustellen. Mit zur Erfindung gehört daher auch die Verwendung von Metallflitter mit einer größten Teilchenlänge von max. 5 mm zur Herstellung einer leitfähigen (meth)acrylischen Beschichtung, sowie die Verwendung von Kohlefasern der Dicke 5 bis 30 $\mu$m und der Länge von 30 bis 5000 $\mu$m zur Herstellung einer leitfähigen (meth)acrylischen Beschichtung und die Verwendung von Metallflitter mit einer größten Teilchenlänge von max. 5 mm zur Herstellung einer leitfähigen (meth)acrylischen Beschichtung.

Im folgenden wird die Erfindung anhand von Figuren und Ausführungsbeispielen näher erläutert.

Es zeigen

Fig. 1     einen amorphen Naturgraphit;

Fig. 2     einen kristallinen künstlichen Graphit; und

Fig. 3     den Aufbau einer leitfähigen Beschichtung.

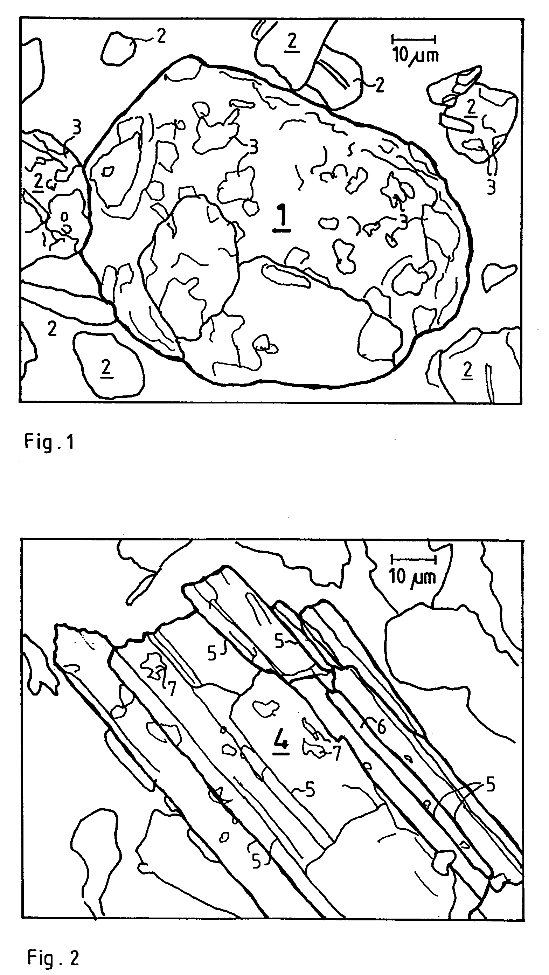

In Fig. 1 ist ein amorpher Naturgraphit zeichnerisch von einer REM-Aufnahme abgebildet (Vergrößerung 1000, 25 KV). Es ist deutlich ein großes Partikel 1 mit einer größten Abmessung von ca. 100 $\mu$m zu erkennen. Daneben sind noch mehrere kleinere Partikel 2 mit einer Größenabmessung von $\geq$ 10 $\mu$m zu erkennen. Die Partikel 1 und 2 sind meist Diskus-ähnlich, d. h. sind abgeflacht und mehr oder weniger gerundet. Die Oberfläche der Partikel 1 und 2 ist von Schuppen 3 besetzt, kristalline Strukturen sind praktisch nicht zu erkennen. Entgegengesetzt hierzu ist in Fig. 2 ein kristalliner künstlicher Graphit unter gleichen Bedingungen abgebildet. Es ist deutlich ein Graphitkristall 4 zu erkennen, der Säulenstruktur hat. Über den Kristall 4 verlaufen mehrere Bruchkanten 5, die alle die kristalline Struktur des Kristalls 4 unterstreichen, d. h. auch Bruchstücke dieses Kristalls haben im wesentlichen die kantige (abgeflachte) Säulenstruktur. Deutlich ist ein sich ablösendes sehr langgestrecktes Plättchen 6 zu erkennen. Die Oberfläche des Kristalls ist nur von wenigen Schuppen 7 bedeckt, die meist ebenfalls ein kantiges Aussehen haben. Mit diesem Graphit läßt sich keine kalte Aushärtung erreichen.

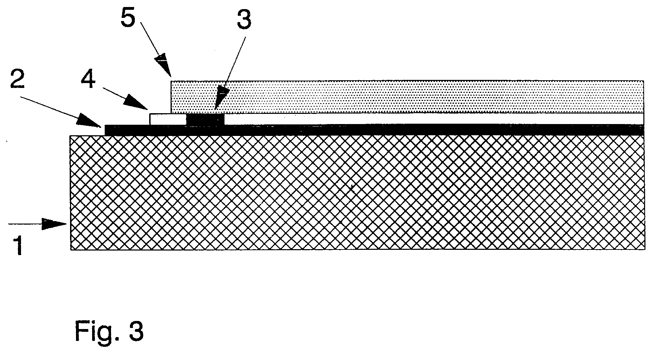

Fig. 3 gibt beispielhaft den Aufbau einer erfindungsgemäßen Beschichtung wieder. Auf einem Untergrund 1 aus Beton ist eine Grundierung 2 aus

| | |
|---|---|
| festes Epoxidharz | 30,0 Gew.-% |
| Xylol | 60,0 Gew.-% |
| Butanol | 10,0 Gew.-% |

aufgetragen, auf die nach Trocknung Kupferleitbänder 3 der Dicke 0,05 mm und Breite 1 cm aufgelegt sind. Die Kupferleitbänder 3 sind mit einer 0,2 mm dicken Leitlackschicht 4 aus

| | |
|---|---|
| flüssiges Epoxidharz | 33,0 Gew.-% |
| aliphatisches Polyamin | 14,0 Gew.-% |
| Äthanol | 17,5 Gew.-% |
| Benzin 80/110 °C Siedepunkt | 10,5 Gew.-% |
| amorpher Naturgraphit 32 - 75 $\mu$m | 25,0 Gew.-% |

überzogen, auf die nach Trocknung eine Leitbeschichtung 5 mit der Stärke 1 bis 1,5 mm und der Zusammensetzung

Bindemittel A - E (ohne Katalysator)

| | |
|---|---|
| Polymethylmethacrylat, mittelmolekular | 20,2 Gew.-Teile |
| Methylmethacrylat | 57,0 Gew.-Teile |
| Dibutylphthalat | 20,0 Gew.-Teile |
| Dimethyl-p-toluidin | 0,5 Gew.-Teile |
| 1,4-Butandioldimethacrylat | 0,5 Gew.-Teile |
| Paraffin (56°C) Schmelzpunkt | 0,5 Gew.-Teile |
| Methylethylketon | 0,3 Gew.-Teile |
| Styrol | 1,0 Gew.-Teile |

gesamte leitfähige Beschichtungsmasse

| | |
|---|---|
| Bindemittel A - E wie oben | 67,0 Gew.-Teile |
| Kohlefaser 0,4 mm | 3,0 Gew.-Teile |
| Aluminiumpulver 0 - 200 μm | 25,0 Gew.-Teile |
| Titandioxid rutil Pigment | 3,0 Gew.-Teile |
| Eisenoxidschwarz-Pigment | 2,0 Gew.-Teile |
| Dibenzoylperoxid 50 % | 2,0 Gew.-Teile |

mittels einer Glättkelle aufgebracht ist. An dieser Beschichtung wurde gemäß DIN 53 482, DIN 51 953 sowie VDE 0 100 und die Praxis, Gerhard Kiefer, VDE-Verlag GmbH, Berlin, S. 170ff, der Oberflächenwiderstand ($R_o$) zu $5,0 \times 10^6$ Ω, der Erdableitwiderstand ($R_E$) zu $1,9 \times 10^6$ Ω und der Standortübergangswiderstand ($R_{ST}$) zu $2,0 \times 10^8$ Ω bestimmt.

**Patentansprüche**

**1.** Polymerisierbares, kalthärtbares, reaktives (Meth)acrylat-System für leitfähige Bodenbeschichtungen enthaltend

A

| | |
|---|---|
| (Meth)acrylat | >50 - 100 Gew.-% |
| Methyl(meth)acrylat | 0 - 100 Gew.-% |
| $C_2$ - $C_4$ (Meth)acrylat | 0 - 100 Gew.-% |
| $\geq C_5$ (Meth)acrylat | 0 - 50 Gew.-% |
| mehrwertige (Meth)acrylate | 0 - 100 Gew.-% |
| Comonomere | 0 - 50 Gew.-% |
| Vinylaromaten | 0 - 30 Gew.-% |
| Vinylester | 0 - 30 Gew.-% |

B auf 1 Teil A 0 - 2 Teile eines in A löslichen oder quellbaren (Pre)polymers
C auf 10 Teile (A + B) 0 - 7 Teile eines Weichmachers
D ein bis zur Polymerisation von den polymerisierbaren Bestandteilen des Systems wenigstens in Bezug auf eine Komponente des Redoxsystems getrennt zu haltendes Redoxsystem enthaltend einen Beschleuniger und einen peroxydischen Katalysator oder Initiator in einer Menge ausreichend zur Kalthärtung der Komponente A
E übliche Additive
F leitfähige Füllstoffe bezogen auf die Summe A - F

amorpher oder sphäroider

Graphit                                10 - 40 Gew.-%

12

oder

Kohlefaser mit einer Dicke im Bereich

5 - 30 µm und einer Länge im Bereich

30 - 5000 µm                    1 -   10 Gew.-%

oder

feinteiliges Metall in Schuppen- , Pulver-

oder Granulatform mit einer größten

Teilchenlänge ≤ 5 mm          2 -   40 Gew.-%

oder

eine Mischung zweier oder aller dieser

leitfähigen Füllstoffe, wobei in der

Mischung die Mindestmenge jedes einzelnen

leitfähigen Füllstoffs entsprechend seinem

Anteil in der Mischung der leitfähigen

Füllstoffe reduziert ist und wobei die

Summe der leitfähigen Füllstoffe auf

< 50 Gew.-% beschränkt ist

G

andere Füllstoffe, bezogen auf

die Summe A - G                 0 -  92 Gew.-%,

wobei

die Summe F + G auf              ≤ 93 Gew.-%

und Füllstoffe zwischen 20 und 50 µm auf                    ≤ 30 Gew.-%

und solche unter 20 µm auf       ≤ 10 Gew.-%

beschränkt sind

H

| Lösungsmittel bezogen auf die Summe A - E plus H | ≤ 15 Gew.-%. |
|---|---|

2.  (Meth)acrylat-System nach Anspruch 1,
    **dadurch gekennzeichnet**
    daß der Graphit ein amorpher Naturgraphit ist.

3.  (Meth)acrylat-System nach Anspruch 1 oder 2,
    **dadurch gekennzeichnet**,
    daß der Graphit zu 80 Gew.-% eine größte Teilchenlänge zwischen 20 und 1000 µm hat.

4.  (Meth)acrylat-System nach einem der vorhergehenden Ansprüche,
    **dadurch gekennzeichnet**,

13

daß die Kohlefaser eine Längenabmessung von 50 bis 2000 $\mu$m und insbesondere von max. 1000 $\mu$m hat.

5. (Meth)acrylat-System nach einem der vorhergehenden Ansprüche,
   **dadurch gekennzeichnet**,
   daß die Metallflitter aus Kupfer und/oder Aluminium sind.

6. Verfahren zur Herstellung einer leitfähigen Beschichtung mit einem Oberflächenwiderstand (DIN 53 482) von $10^3$ bis $10^9$ Ohm und/oder einem Ableitwiderstand (DIN 51 953) von $10^3$ bis $10^9$ Ohm,
   **dadurch gekennzeichnet**,
   daß man ein polymerisierbares, kalthärtbares, reaktives (Meth)acrylat-System enthaltend
   A

| (Meth)acrylat | 50 - 100 Gew.-% |
|---|---|
| Methyl(meth)acrylat | 0 - 100 Gew.-% |
| $C_2$ - $C_4$ (Meth)acrylat | 0 - 100 Gew.-% |
| $\geq C_5$ (Meth)acrylat | 0 - 50 Gew.-% |
| mehrwertige (Meth)acrylate | 0 - 100 Gew.-% |
| Comonomere | 0 - 50 Gew.-% |
| Vinylaromaten | 0 - 30 Gew.-% |
| Vinylester | 0 - 30 Gew.-% |

B auf 1 Teil A 0 - 2 Teile eines in A löslichen oder quellbaren (Pre)polymers
C auf 10 Teile (A + B) 0 - 7 Teile eines Weichmachers
D ein bis zur Polymerisation von den zu polymerisierenden Bestandteilen des Systems wenigstens in Bezug auf eine Komponente des Redoxsystems getrennt zu haltendes Redoxsystem enthaltend einen Beschleuniger und einen peroxydischen Katalysator oder Initiator in einer Menge ausreichend zur Kalthärtung der Komponente A
E übliche Additive
F leitfähige Füllstoffe bezogen auf die Summe A - F

```
amorpher oder sphäroider

Graphit                          10 -   40 Gew.-%

oder

Kohlefaser mit einer Dicke im Bereich

5 - 30 µm und einer Länge im Bereich

30 - 5000 µm                     1 -   10 Gew.-%

oder

feinteiliges Metall in Schuppen- , Pulver-

oder Granulatform mit einer größten

Teilchenlänge ≤ 5 mm            2 -   40 Gew.-%

oder
```

14

```
        eine Mischung zweier oder aller dieser
        leitfähigen Füllstoffe, wobei in der
        Mischung die Mindestmenge jedes einzelnen
        leitfähigen Füllstoffs entsprechend seinem
        Anteil in der Mischung der leitfähigen
        Füllstoffe reduziert ist und wobei die
        Summe der leitfähigen Füllstoffe auf
        50 Gew.-% beschränkt ist

    G

        andere Füllstoffe, bezogen auf
        die Summe A - G              0 -  92 Gew.-%,
        wobei
            die Summe F + G auf          ≤ 93 Gew.-%
            und Füllstoffe zwischen 20
            und 50 μm auf                ≤ 30 Gew.-%
            und solche unter 20 μm auf   ≤ 10 Gew.-%
            beschränkt sind

    H
```

| Lösungsmittel bezogen auf die Summe A - E plus H | ≦ 15 Gew.-% |
| --- | --- |

auf eine zu beschichtende Fläche aufträgt und aushärten läßt.

**7.** Verfahren nach Anspruch 6,
**dadurch gekennzeichnet**,
daß das Aushärten bei Unmgebungstemperatur erfolgt.

**8.** Verfahren nach einem der Ansprüche 6 oder 7,
**dadurch gekennzeichnet**,
daß amorpher oder sphäroider Graphit zur Herstellung einer leitfähigen, (meth)acrylischen Beschichtung oder leitfähiger Polymerbetonformteile verwendet wird.

**9.** Verfahren nach einem der Ansprüche 6 oder 7,
**dadurch gekennzeichnet**,
daß Kohlefasern der Dicke 5 bis 30 $\mu$m und der Länge von 30 bis 5000 $\mu$m zur Herstellung einer leitfähigen (meth)acrylischen Beschichtung verwendet werden.

**10.** Verfahren nach einem der Ansprüche 6 oder 7,
**dadurch gekennzeichnet**,
daß Metallflitter mit einer größten Teilchenlänge von max. 5 mm zur Herstellung einer leitfähigen (meth)acrylischen Beschichtung verwendet werden.

Fig.1

Fig. 2

Fig. 3

| | Europäisches Patentamt | **EUROPÄISCHER RECHERCHENBERICHT** | Nummer der Anmeldung<br>EP 94 10 7602 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | EP-A-0 281 365 (NIPPON OIL)<br>--- | 1 | C09D4/00 |
| A | GB-A-2 156 835 (GENCORP)<br>--- | 1 | |
| A | US-A-4 959 178 (FRENTZEL ET AL.)<br>----- | 1 | |

| | RECHERCHIERTE SACHGEBIETE (Int.Cl.5) |
|---|---|
| | C09D |

Der vorliegende Recherchenbericht wurde für alle Patentansprüche erstellt

| Recherchenort | Abschlußdatum der Recherche | Prüfer |
|---|---|---|
| DEN HAAG | 14. Juli 1994 | Andriollo, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes Dokument

EPO FORM 1503 03.82 (P04C03)